# EUROPEAN PATENT APPLICATION

(11) **EP 2 544 348 A2**
(43) Date of publication of application: **09.01.2013**
(21) Application number: 11187282.6
(22) Date of filing: 31.10.2011
(51) Int. Cl.: H02M 3/335, H02M 3/337

(54) **Bisynchronous resonant switching-type direct current power supply**

(30) Priority: 06.07.2011 TW 100212366
(71) Applicant: Delin International Energy Co., Ltd., Kaohsiung City 814 (TW)
(72) Inventor: Huang, Wen-Chin, 814 Kaohsiung City (TW)
(74) Representative: Zimmermann, Tankred Klaus

(57) **Abstract**

A bisynchronous resonant switching-type direct current power supply includes a power supply unit (2), a power factor correcting unit (3), a resonant converting unit (4), and a synchronous rectifying unit (5). The power supply unit (2) includes a power supply circuit (21) to receive an alternating current signal, and a rectifying-and-filtering circuit (23) operable to obtain a direct current voltage output (Va) from the alternating current signal. The power factor correcting unit (3) includes a voltage booster (31), an active power factor correcting chip circuit (32) and two transistor control circuits (33, 34) . The resonant converting unit (4) includes a power switch circuit (41), a resonant chip circuit (42) , and a voltage converting circuit (43) . The voltage converting circuit (43) has primary and secondary windings (T1, T2) . The synchronous rectifying unit (5) includes first and second resonant bridge rectifier circuits (51, 52) and a supply voltage output circuit (53).

## Description

The invention relates to a switching-type direct current power supply, and more particularly to a bisynchronous resonant switching-type direct current power supply.

A power converter is the source of power that all electronic products or devices need to operate. Under the driving force and the trend to save energy, power converters often need to be energy-saving and eco-friendly.

FIG. 1 shows a half-bridge resonant converter disclosed in Taiwanese Patent Publication No. 1309914. The converter has a primary winding set 11, and a secondary winding set 12. The secondary winding set 12 has a first electronic switch 121, a second electronic switch 122, a first energy storage unit 123, and a second energy storage unit 124. The first electronic switch 121 is composed of a MOSFET power transistor and a winding set, and the second electronic switch 122 is composed of another MOSFET power transistor and a winding set. The first energy storage unit 123 is composed of a filter inductor arranged parallel to a series connection of a diode and a resistor, and the second energy storage unit 124 is composed of another filter inductor arranged parallel to a series connection of a diode and a resistor. Synchronous rectification is achieved through the first and second electronic switches 121, 122. Moreover, the first and second energy storage units 123, 124 can prevent the first and second electronic switches 121, 122 from energy loss due to the reverse bias voltage.

However, as the half-bridge resonant converter is often influenced by the power loss of the output signal, load inductance or load capacitance, the voltage and the current of the output signal have a large phase difference, causing a decrease in power factor. Therefore, increasing power factor has been a subject in which a lot of related industries are working eagerly on.

Therefore, an object of the present invention is to provide a bisynchronous resonant switching-type direct current power supply capable of increasing the power factor and efficiency.

According to the present invention, a synchronous resonant switching-type direct current power supply comprises a power supply unit, a power factor correcting unit, a resonant converting unit and a synchronous rectifying unit.

The power supply unit includes a power supply circuit to receive an alternating current signal from an alternating current source, and a rectifying-and-filtering circuit electrically coupled to the power supply circuit and operable to rectify and filter the alternating current signal to obtain a direct current voltage output.

The power factor correcting unit includes a voltage booster, an active power factor correcting chip circuit and two transistor control circuits. The voltage booster is electrically coupled to the rectifying-and-filtering circuit. The active power factor correcting chip circuit is electrically coupled to the voltage booster. The two transistor control circuits are arranged in parallel and are electrically coupled to the active power factor correcting chip circuit.

The resonant converting unit includes a power switch circuit, a resonant chip circuit and a voltage converting circuit. The power switch circuit is electrically coupled to the voltage booster. The resonant chip circuit is electrically coupled to the power switch circuit and is operable to control the power switch circuit to switch conducting states in an alternating manner. The voltage converting circuit is electrically coupled to the power switch circuit, and has a primary winding electrically coupled to the power switch circuit, and a secondary winding coupled to the primary winding.

The synchronous rectifying unit includes a first resonant bridge rectifier circuit, a second resonant bridge rectifier circuit and a supply voltage output circuit. The first resonant bridge rectifier circuit and the second resonant bridge rectifier circuit are respectively coupled to two terminals of the secondary winding. The supply voltage output circuit is electrically coupled to the first and second resonant bridge rectifier circuits.

The power factor correcting unit uses two devices arranged parallel to each other, while at the same time, controlled by the active power factor correcting chip circuit whether to conduct or cut off, effectively raising the power factor to lower reactive power consumption. Concurrently, the synchronous rectifying unit uses the first and second resonant bridge rectifier circuits to respectively and synchronously rectify positive and negative half-cycles of the alternating current voltage from the secondary winding of the resonant converting unit, effectively increase the efficiency of the switching-type direct current power supply to save energy.

Other features and advantages of the present invention will become apparent in the following detailed description of the preferred embodiment with reference to the accompanying drawings, of which:

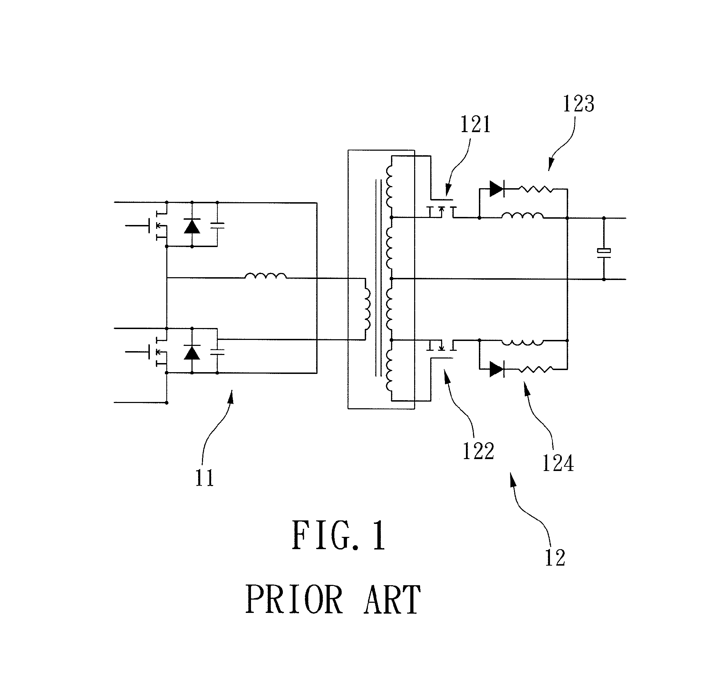

FIG. 1 is a circuit diagram of a half-bridge resonant converter disclosed in Taiwanese Patent Publication No. I309914;
FIG. 2 is a functional block diagram showing the preferred embodiment of a bisynchronous resonant switching-type direct current power supply of the present invention;
FIG. 3 is a circuit diagram showing a power supply unit of the preferred embodiment;
FIG. 4 is a circuit diagram showing a power factor correcting unit of the preferred embodiment;
FIG. 5 is a circuit diagram showing a resonant converting unit of the preferred embodiment;
FIG. 6 is a circuit diagram showing a synchronous rectifying unit of the preferred embodiment; and
FIG. 7 is a circuit diagram showing an abnormal voltage/current detecting unit of the preferred embodiment.

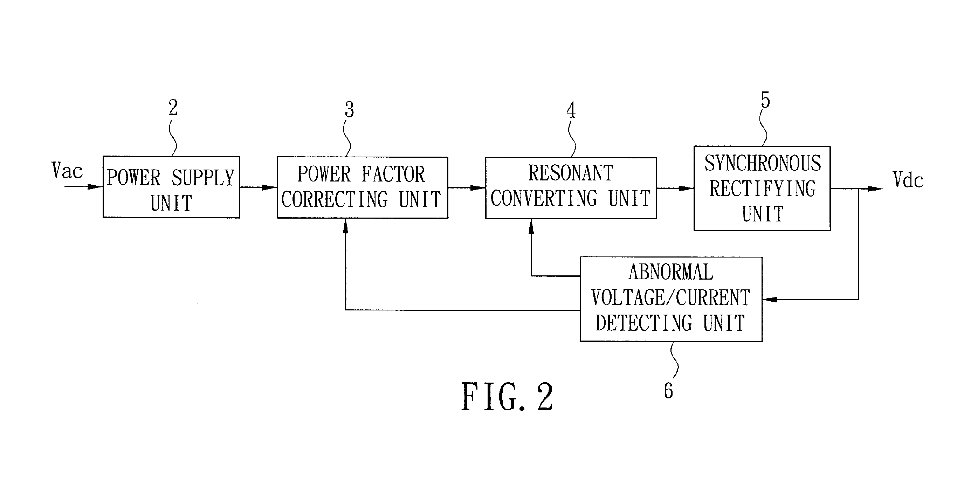

Referring to FIG. 2, the preferred embodiment of a bisynchronous resonant switching-type direct current power supply of the present invention is shown to include including a power supply unit 2, a power factor correcting unit 3, a resonant converting unit 4, a synchronous rectifying unit 5, and an abnormal voltage/current detecting unit 6.

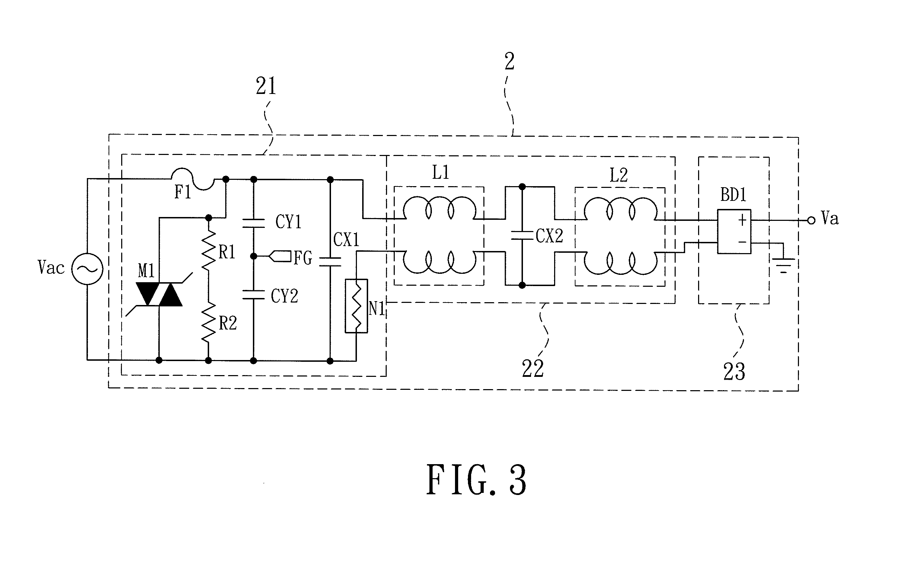

Referring to FIG. 2 and FIG. 3, the power supply unit 2 includes a power supply circuit 21 to receive an alternating current signal from an alternating current source Vac, a rectifying-and-filtering circuit 23 electrically coupled to the power supply circuit 21 and operable to rectify and filter the alternating current signal from the alternating current source Vac to obtain a direct current voltage output Va, and an anti-interference circuit 22 electrically coupled between the power supply circuit 21 and the rectifying-and-filtering circuit 23. The anti-interference circuit 22 is an Electromagnetic Compatibility (EMC) circuit to prevent electromagnetic interference, radioactive interference or wiring conduction interference from affecting circuit performance.

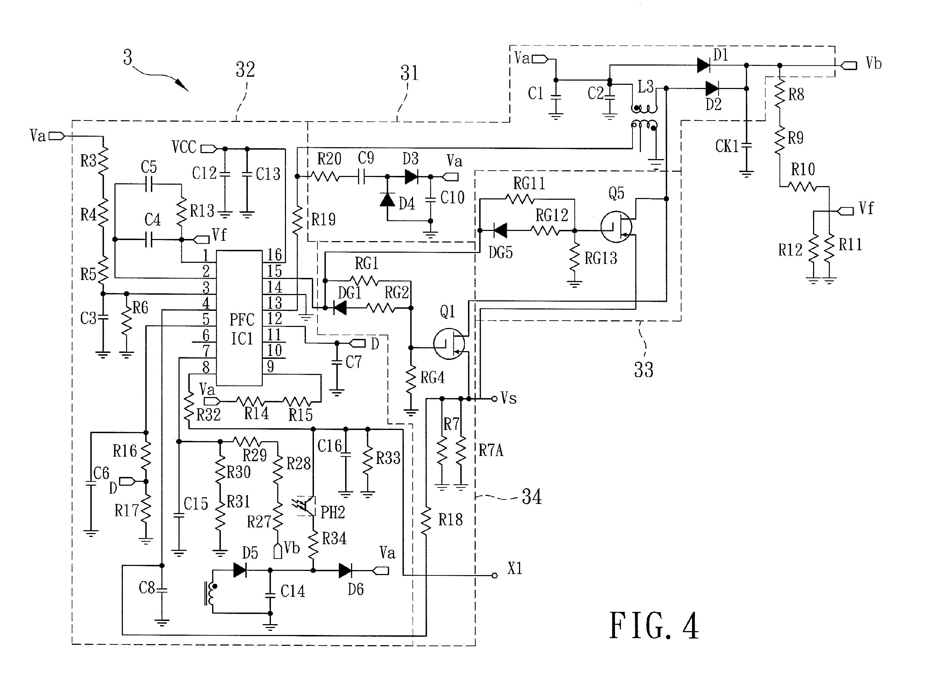

Referring to FIG. 2 and FIG. 4, the power factor correcting unit 3 includes a voltage booster 31 electrically coupled to the rectifying-and-filtering circuit 23, an active power factor correcting chip circuit 32 electrically coupled to the voltage booster 31, and two transistor control circuits 33, 34 arranged in parallel and electrically coupled to the active power factor correcting chip circuit 32. The active power factor correcting chip circuit 32 controls conduction and cut-off of the two transistor control circuits 33, 34.

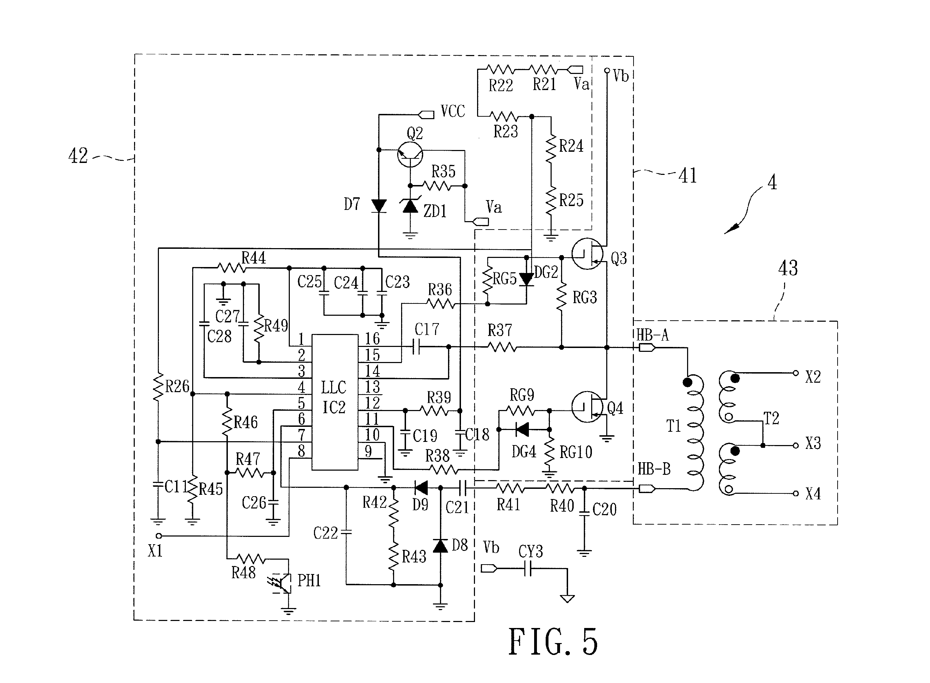

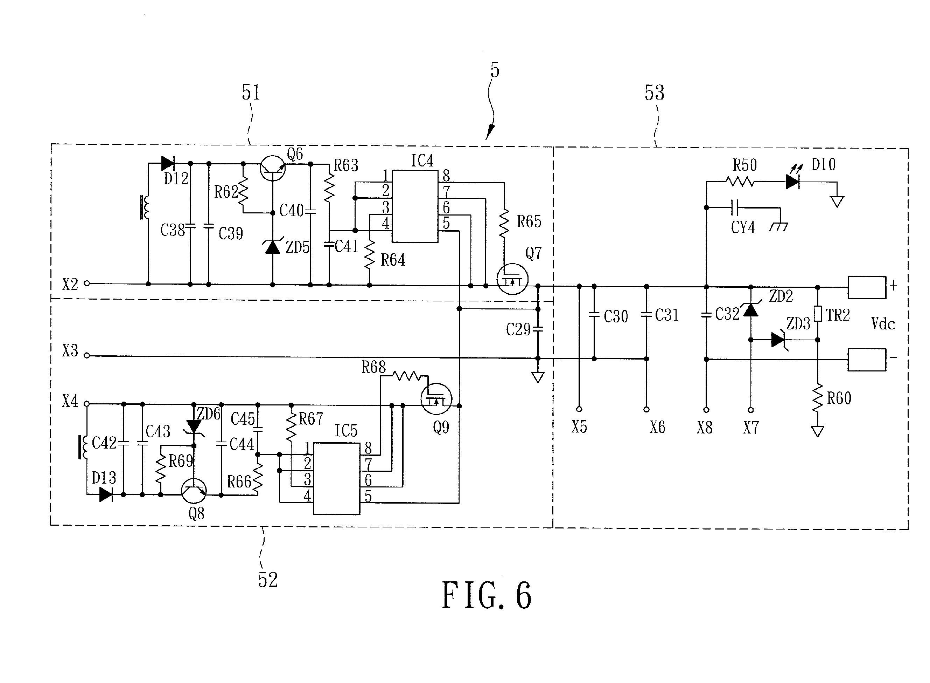

Referring to FIG. 2 and FIG. 5, the resonant converting unit 4 includes a power switch circuit 41 electrically coupled to the voltage booster 31, a resonant chip circuit 42 electrically coupled to the power switch circuit 41 and operable to control the power switch circuit 41 to switch conducting states in an alternating manner, and a voltage converting circuit 43 electrically coupled to the power switch circuit 41. The voltage converting circuit 43 has a primary winding T1 electrically coupled to the power switch circuit 41, and a secondary winding T2 coupled to said primary winding T1. A center-tap rectification scheme is employed at the secondary winding T2 to electrically couple to the synchronous rectifying unit 5 (shown in FIG. 6).

Referring to FIG. 2 and FIG. 6, the synchronous rectifying unit 5 includes a first resonant bridge rectifier circuit 51 and a second resonant bridge rectifier circuit 52 respectively coupled to two terminals of the secondary winding T2, and a supply voltage output circuit 53 electrically coupled to the first and second resonant bridge rectifier circuits 51, 52.

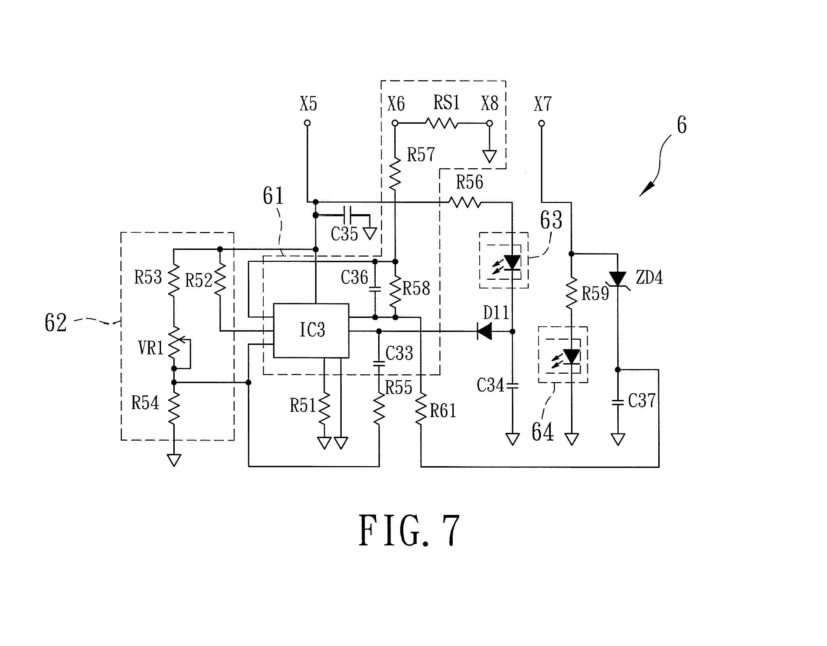

Referring to FIG. 2 and FIG. 7, the abnormal voltage/current detecting unit 6 is electrically coupled to the supply voltage output circuit 53. The abnormal voltage/current detecting unit 6 includes a constant voltage constant current amplifying circuit 61, an output voltage adjusting circuit 62 electrically coupled to the constant voltage constant current amplifying circuit 61, and a first photocoupler 63 and a second photocoupler 64 each coupled to the constant voltage constant current amplifying circuit 61. Referring to FIG. 5, the resonant chip circuit 42 of the resonant converting unit 4 is electrically coupled to a first coupler PH1 that is capable of optical coupling with the first photocoupler 63. Referring to FIG. 4, the active power factor correcting chip circuit 32 of the power factor correcting unit 3 is electrically coupled to a second coupler PH2 that is capable of optical coupling with the second photocoupler 64.

Referring to FIGS. 2, 3, 4, when the switching-type direct current power supply of the present embodiment operates, the power supply circuit 21 of the power supply unit 2 receives an alternating current signal (70V-264V) from a commercial alternating current power source Vac. The alternating current signal passes through the anti-interference circuit 22 to prevent electromagnetic and radioactive interference, and is rectified and filtered by therectifying-and-filtering circuit 23 to obtain a direct current voltage output Va. The direct current voltage output Va then undergoes voltage division through resistors R3, R4, R5, R6 of the power factor correcting unit 3 before being fed into a PFC IC1 of the active power factor correcting chip circuit 32. At the same time, the direct current voltage output Va undergoes another voltage division through a diode D1 and resistors R8, R9, R10, R11, R12 to output a feedback voltage Vf, which is also fed into the PFC IC1. Thus, when load of a remote end changes, the direct current voltage Vb output by the voltage booster 31 can be kept at a constant level. A source terminal voltage Vs of the two parallel arranged transistor control circuits 33, 34 is fed into the PFC IC1 after going through resistor R18. Through comparisons among the direct current voltage output Va, feedback voltage Vf and the source terminal voltage Vs, the PFC IC1 is able to control conduction and cut-off times of MOSFET transistors Q1, Q5 of the two parallel arranged transistor control circuits 33, 34. Accordingly, the current waveform of the direct current voltage output Va may be shaped to track the voltage phase, thereby reducing the phase difference between voltage and current, thus increasing the power factor. The average power factor of the present embodiment can be maintained to be at least 90%. Through the two parallel arranged devices controlled by the PFC IC1 of the active power factor correcting chip circuit 32, in combination with the inductor L3 of the voltage booster 31, when the two transistors Q1, Q5 conduct, the current flowing through the inductor L3 can be largely increased. On the contrary, when the two transistors Q1, Q5 are cut-off, the discharge time of the high direct current voltage Vb (approximately 380V-400V) of the voltage booster 31 through the inductor L3 is largely shortened.

Referring to FIGS. 2, 4, 5, the resonant converting unit 4 mainly converts the high direct current voltage Vb outputted from the power factor correcting unit 3 to the voltage needed by a load. This is achieved by generating resonance using a LLC IC2 of the resonant chip circuit 42 and parasitic capacitor C17 of MOSFET power transistors Q3, Q4 of the power switch circuit 41. The oscillations create two resonant frequency signals each having 50% duty cycle and can trigger conduction of the two power transistors Q3, Q4 in an alternating manner. Under the situation of zero voltage switching loss of the two power transistors Q3, Q4, the LLC IC2 can change the switching signal frequency, which changes conduction of the two power transistors Q3, Q4 according to the size of the load. The high direct current voltage Vb outputted from the power factor correcting unit 3 is thus converted into a sinusoidal voltage outputted to the primary winding T1 of the voltage converting circuit 43. Due to coupling with the secondary winding T2, the sinusoidal voltage is further converted to an alternating current voltage having both positive and negative sinusoidal waveforms . When the load is light, the switching signal frequency that triggers the conduction of the two power transistors Q3, Q4 is higher than the resonant frequency to lower the gain. When the load is heavy, the switching signal frequency that triggers the conduction of the two power transistors Q3, Q4 is lower than the resonant frequency to increase gain. When the load is normal, the switching signal frequency is at around the resonant frequency to maintain the gain.

Referring to FIGS. 2, 5, 6, regarding the positive and negative sinusoidal waveforms of the output alternating current voltage converted from the resonant converting unit 4, the positive sinusoidal waveform part and the negative sinusoidal waveform part are each fed into a respective one of the first resonant bridge rectifying circuit 51 and the second resonant bridge rectifying circuit 52 in the synchronous rectifying unit 5. Using the synchronous rectifying IC4, IC5, a direct current voltage is generated from bisynchronous rectification and filtering of the alternating current voltage having both positive and negative sinusoidal waveforms. After voltage regulation by the supply voltage output circuit 53, a stable direct current voltage Vdc is outputted.

Referring to FIGS. 2, 6, 7, the constant voltage constant current amplifying circuit 61 of the abnormal voltage/current detecting unit 6 can provide the direct current voltage Vdc outputted by the supply voltage output circuit 53 to be stably supplied to the load. With adequate adjustments of a variable resistor VR1 in the output voltage adjusting circuit 62, voltage level of the direct current voltage Vdc outputted by the supply voltage output circuit 53 may be set. The micro-resistance metal resistor RS1 of the constant voltage constant current amplifying circuit 61 can accurately detect changes in the load of the direct current voltage Vdc outputted by the supply voltage output circuit 53, and appropriately provide feedback to the constant voltage constant current amplifying circuit 61. When an abnormal voltage is detected in the load of the direct current voltage Vdc, the constant voltage constant current amplifying circuit 61 will drive the first photocoupler 63 to optically couple with the first coupler PH1 that is electrically coupled to the resonant chip circuit 42 of the resonant converting unit 4 and shut down the resonant chip circuit 42. If the micro-resistance metal resistor RS1 detects an abnormal current in the load of the direct current voltage Vdc, the constant voltage constant current amplifying circuit 61 will drive the second photocoupler 64 to optically couple with the second coupler PH2 that is electrically coupled to the active power factor correcting chip circuit 32 of the power factor correcting unit 3 and shut down the active power factor correcting chip circuit 32. This protects the switching-type direct current power supply of the present embodiment.

From the above description, the bisynchronous resonant switching-type direct current power supply of the present invention uses two parallel arranged devices of the power factor correcting unit 3 controlled by the active power factor correcting chip circuit 32, effectively raise the power factor and lower reactive power consumption. At the same time, with the synchronous rectifying unit 5 using the first and second resonant bridge rectifying circuits 51, 52 to respectively perform bisynchronous rectification and filtering of positive and negative sinusoidal waves of the alternating current voltage, from the secondary winding T2 of the resonant converting unit 4, the efficiency of the switching-type direct current power supply can be effectively increased to save energy.

## Claims

1. A bisynchronous resonant switching-type direct current power supply, **characterized by**:
a power supply unit (2) including a power supply circuit (21) to receive an alternating current signal from an alternating current source (Vac), and a rectifying-and-filtering circuit (23) electrically coupled to said power supply circuit (21) and operable to rectify and filter the alternating current signal to obtain a direct current voltage output (Va);
a power factor correcting unit (3) including a voltage booster (31) electrically coupled to said rectifying-and-filtering circuit (23), an active power factor correcting chip circuit (32) electrically coupled to said voltage booster (31), and two transistor control circuits (33, 34) arranged in parallel and electrically coupled to said active power factor correcting chip circuit (32);
a resonant converting unit (4) including a power switchcircuit (41) electrically coupled to said voltage booster (31), a resonant chip circuit (42) electrically coupled to said power switch circuit (41) and operable to control said power switch circuit (41) to switch conducting states in an alternating manner, and a voltage converting circuit (43) electrically coupled to said power switch circuit (41), said voltage converting circuit (43) having a primary winding (T1) electrically coupled to said power switch circuit (41), and a secondary winding (T2) coupled to said primary winding (T1) ; and
a synchronous rectifying unit (5) including a first resonant bridge rectifier circuit (51) and a second resonant bridge rectifier circuit (52) respectively coupled to two terminals of said secondary winding (T2) , and a supply voltage output circuit (53) electrically coupled to said first and second resonant bridge rectifier circuits (51, 52).

2. The bisynchronous resonant switching-type direct current power supply as claimed in Claim 1, further comprising an abnormal voltage/current detecting unit (6) electrically coupled to said supply voltage output circuit (53), said abnormal voltage/current detecting unit (6) including a constant voltage constant current amplifying circuit (61), an output voltage adjusting circuit (62) electrically coupled to said constant voltage constant current amplifying circuit (61), and a first photocoupler (63) and a second photocoupler (64) each coupled to said constant voltage constant current amplifying circuit (61) , said resonant chip circuit (42) of said resonant converting unit (4) being electrically coupled to a first coupler that is capable of optical coupling with said first photocoupler (63) , said active power factor correcting chip circuit (32) of said power factor correcting unit (3) being electrically coupled to a second coupler that is capable of optical coupling with said second photocoupler (64).

3. The bisynchronous resonant switching-type direct current power supply as claimed in Claim 2, wherein said power supply unit (2) further includes an anti-interference circuit (22) electrically coupled between said power supply circuit (21) and said rectifying-and-filtering circuit (23).
